# EUROPEAN PATENT APPLICATION

(11) **EP 4 847 544 A1**
(43) Date of publication of application: **02.12.2026**
(21) Application number: 25757800.5
(22) Date of filing: 18.02.2025
(51) Int. Cl.: C08G 18/09, C08G 18/10, C08G 18/48, C08G 18/73, C09D 175/04

(54) **MODIFIED POLYISOCYANATE, MOLDABLE POLYURETHANE RESIN COMPOSITION, COATING MATERIAL COMPOSITION, AND COATING FILM**

(30) Priority: 22.02.2024 JP 2024025869
(71) Applicant: Tosoh Corporation, Shunan-shi, Yamaguchi 746-8501 (JP)
(72) Inventor: NOGUCHI, Shuto, Yokkaichi-shi, Mie 510-8540 (JP); HORIGUCHI, Kenji, Yokkaichi-shi, Mie 510-8540 (JP)
(74) Representative: TBK
(86) International application number: PCT/JP2025/005441
(87) International publication number: WO 2025/178031

(57) **Abstract**

A modified polyisocyanate that is an allophanatization reaction product of a polyisocyanate containing an aliphatic polyisocyanate having an aliphatic hydrocarbon group having 4 to 6 carbon atoms and a polyol containing polytetramethylene ether glycol, or a modified product thereof, wherein a dispersity is 1.0 to 2.1, and wherein a proportion of the content of urethane groups to the total content of allophanate groups, isocyanurate groups, and urethane groups is 19 mol% or less.

## Description

### Technical Field

The present disclosure relates to a modified polyisocyanate, a polyurethane resin-forming composition, a coating material composition, and a coating film.

### Background Art

Conventionally, aliphatic polyisocyanates such as hexamethylene diisocyanate (HDI) and modified polyisocyanates which are modified products thereof have been used as curing agents for coating materials, adhesives, and the like.

For example, Patent Literature 1 discloses a modified polyisocyanate for use as a curing agent for coating materials, which is a reaction product of a polyisocyanate component containing an organic diisocyanate or a modified product thereof and a polyol component containing at least one selected from the group consisting of polytetramethylene ether glycol and polycarbonate polyol having a number average molecular weight of 200 to 750, or a modified product thereof.

### Citation List

### Patent Literature

[Patent Literature 1] International Publication No. 2022/210289

### Summary of Invention

### Technical Problem

However, a polyisocyanate modified with polytetramethylene ether glycol may undergo a significant increase in viscosity over time, and there is room for improvement in storage stability. In addition, the hardness of a coating film may decrease when a polyisocyanate modified with polytetramethylene ether glycol is used as a curing agent.

Therefore, one aspect of the present disclosure aims to provide a modified polyisocyanate that is unlikely to cause a decrease in coating film hardness and has excellent storage stability. In addition, some other aspects of the present disclosure aim to provide a urethane resin-forming composition and a coating material composition using the above modified polyisocyanate, and a coating film containing a cured product of the coating material composition.

### Solution to Problem

The present disclosure provides the following [1] to [11] in some aspects.
[1] A modified polyisocyanate that is an allophanatization reaction product of a polyisocyanate containing an aliphatic polyisocyanate having an aliphatic hydrocarbon group having 4 to 6 carbon atoms and a polyol containing polytetramethylene ether glycol, or a modified product thereof,
   wherein a dispersity is 1.0 to 2.1, and
   wherein a proportion of a content of urethane groups to a total content of allophanate groups, isocyanurate groups, and urethane groups is 19 mol% or less.
[2] The modified polyisocyanate according to [1], wherein the proportion of the content of urethane groups to the total content of allophanate groups, isocyanurate groups, and urethane groups is 0.01 to 7 mol%.
[3] The modified polyisocyanate according to [1] or [2], wherein a proportion of a content of allophanate groups to the total content of allophanate groups, isocyanurate groups, and urethane groups is 75 to 98 mol%.
[4] The modified polyisocyanate according to any one of [1] to [3], wherein a proportion of a content of isocyanurate groups to the total content of allophanate groups, isocyanurate groups, and urethane groups is 0.1 to 7 mol%.
[5] The modified polyisocyanate according to any one of [1] to [4], wherein an average number of isocyanate groups is 6.0 to 8.0.
[6] The modified polyisocyanate according to any one of [1] to [5], wherein a number average molecular weight is 1500 to 2000 g/mol.
[7] The modified polyisocyanate according to any one of [1] to [6], wherein a number average molecular weight of the polytetramethylene ether glycol is 200 to 800.
[8] The modified polyisocyanate according to any one of [1] to [7], wherein a dispersity of the polytetramethylene ether glycol is 1.00 to 1.60.
[9] A polyurethane resin-forming composition containing the modified polyisocyanate according to any one of [1] to [8] and a polyol.
[10] A coating material composition containing the polyurethane resin-forming composition according to [9].
[11] A coating film containing a cured product of the coating material composition according to [10].

### Advantageous Effects of Invention

According to the present disclosure, it is possible to provide a modified polyisocyanate that is unlikely to cause a decrease in coating film hardness and has excellent storage stability. In addition, according to the present disclosure, it is possible to provide a urethane resin-forming composition and a coating material composition using the above modified polyisocyanate, and a coating film containing a cured product of the coating material composition.

### Description of Embodiments

Hereinafter, exemplary embodiments for implementing respective aspects of the present disclosure will be described in detail. However, the present disclosure is not limited to the following embodiments.

Here, in the present specification, when a numerical range is indicated using "to," it means a range including numerical values stated before and after "to" as a minimum value and a maximum value, respectively. In addition, unless otherwise specified, units of numerical values stated before and after "to" are the same. In addition, in the numerical ranges described in the present specification, an upper limit value or a lower limit value in the numerical range may be replaced with values shown in examples. In addition, the upper limit value and the lower limit value described individually can be arbitrarily combined. In addition, materials exemplified below may be used alone or in combination of two or more, unless otherwise specified. The content of each component in a composition means the total amount of the plurality of substances present in the composition that correspond to each component, unless otherwise specified, when a plurality of substances corresponding to each component are present in the composition.

### <Modified polyisocyanate>

One embodiment of the present disclosure is a modified polyisocyanate that is an allophanatization reaction product of a polyisocyanate containing an aliphatic polyisocyanate having an aliphatic hydrocarbon group having 4 to 6 carbon atoms (hereinafter referred to as "polyisocyanate (A)") and a polyol containing polytetramethylene ether glycol (hereinafter referred to as "polyol (B)"), or a modified product thereof, wherein a dispersity is 1.0 to 2.1, and wherein a proportion of the content of urethane groups to the total content of allophanate groups, isocyanurate groups, and urethane groups is 19 mol% or less.

Here, in the present specification, the reaction for urethanization of a polyisocyanate and a polyol and the subsequent allophanatization is collectively referred to as an allophanatization reaction. In the allophanatization reaction, other reactions such as isocyanuration may proceed in addition to allophanatization, and compounds produced as a result of these reactions also constitute the above modified polyisocyanate. The modified product is a general term for products obtained by modifying the above allophanatization reaction product, and has allophanate groups formed by the allophanatization reaction of polyisocyanate (A) and polyol (B), similarly to the allophanatization reaction product. Examples of modified products include block-modified products. A block-modified product is a reaction product of an allophanatization reaction product and a blocking agent, and has a structure in which at least a part of the free isocyanate groups in the allophanatization reaction product are blocked with a blocking agent.

In addition, "dispersity" in the present specification means the ratio of the weight average molecular weight to the number average molecular weight. The number average molecular weight and the weight average molecular weight are values measured using GPC (gel permeation chromatography) under the following conditions. However, when the modified polyisocyanate is a block-modified product, the number average molecular weight and the weight average molecular weight of the modified polyisocyanate in an unblocked state (when the blocking agent is dissociated) are measured.

### [Conditions]

·Measurement instrument: "HLC-8120" (manufactured by Tosoh Corporation)
· Column: "TSKguardcolumn HXL-L" (manufactured by Tosoh Corporation)
   Particle size=6 µm, size=6 mm ID×30 cm×4 columns
· Carrier: tetrahydrofuran (THF)
· Detector: differential refractive index
· Sample: 0.1% THF solution
· Calibration curve: polystyrene

As described above, the modified polyisocyanate may be a mixture of a plurality of compounds having different molecular weights. The modified polyisocyanate that is such a mixture can also be referred to as a modified polyisocyanate composition. That is, another embodiment of the present disclosure is a modified polyisocyanate composition that contains an allophanatization reaction product of polyisocyanate (A) and polyol (B), or a modified product thereof, has a dispersity of 1.0 to 2.1, and has a proportion of the content of urethane groups to the total content of allophanate groups, isocyanurate groups, and urethane groups contained in the composition of 19 mol% or less. The "total content of allophanate groups, isocyanurate groups, and urethane groups contained in the composition" means the total content of allophanate groups, isocyanurate groups, and urethane groups contained in each of the allophanate group-containing compounds, isocyanurate group-containing compounds, and urethane group-containing compounds contained in the composition. Here, the allophanate group-containing compound, the isocyanurate group-containing compound, and the urethane group-containing compound mean a compound having allophanate groups, a compound having isocyanurate groups, and a compound having urethane groups, respectively. A compound having allophanate groups and isocyanurate groups corresponds to both an allophanate group-containing compound and an isocyanurate group-containing compound, a compound having allophanate groups and urethane groups corresponds to both an allophanate group-containing compound and a urethane group-containing compound, and a compound having isocyanurate groups and urethane groups corresponds to both an isocyanurate group-containing compound and a urethane group-containing compound.

In the above embodiment, the allophanatization reaction product and a modified product thereof can also be referred to as a composition containing a compound having a structure formed by the allophanatization reaction of an aliphatic polyisocyanate having an aliphatic hydrocarbon group having 4 to 6 carbon atoms and polytetramethylene ether glycol (for example, a structure containing a residue of an aliphatic polyisocyanate having an aliphatic hydrocarbon group having 4 to 6 carbon atoms, a residue of polytetramethylene ether glycol, and allophanate groups). Another embodiment of the present disclosure is a modified polyisocyanate composition that contains a compound having a structure formed by the allophanatization reaction of an aliphatic polyisocyanate having an aliphatic hydrocarbon group having 4 to 6 carbon atoms and polytetramethylene ether glycol, has a dispersity of 1.0 to 2.1, and has a proportion of the content of urethane groups to the total content of allophanate groups, isocyanurate groups, and urethane groups contained in the composition of 19 mol% or less. Here, the meaning of "total content of allophanate groups, isocyanurate groups, and urethane groups contained in the composition" is the same as above. In addition, the above "residue of an aliphatic polyisocyanate having an aliphatic hydrocarbon group having 4 to 6 carbon atoms" means a group remaining after removing isocyanate groups from an aliphatic polyisocyanate having an aliphatic hydrocarbon group having 4 to 6 carbon atoms, and the above "residue of polytetramethylene ether glycol" means a group remaining after removing hydroxyl groups from polytetramethylene ether glycol.

In the following description, the modified polyisocyanate may be read as the modified polyisocyanate composition.

The above modified polyisocyanate has excellent storage stability and is unlikely to undergo an increase in viscosity over time. In addition, when the above modified polyisocyanate is used as a curing agent for coating materials, it is unlikely to cause a decrease in coating film hardness. Therefore, by using the above modified polyisocyanate as a curing agent for coating materials, it is possible to form a coating film having sufficient hardness.

The reason why the above effects are obtained is not clear, but it is considered that when urethane groups formed by the reaction of polyisocyanate (A) and polyol (B) remain in the molecule, an increase in viscosity over time occurs due to increased crystallinity caused by intermolecular hydrogen bonding, whereas in the above modified polyisocyanate, since the proportion of the content of urethane groups to the total content of allophanate groups, isocyanurate groups, and urethane groups is 19 mol% or less, it is inferred that the increase in viscosity due to the above urethane groups is suppressed. In addition, it is considered that when there is variation in the molecular weight distribution, portions with low crosslinking density are likely to be formed by molecules with large molecular weights, causing a decrease in coating film hardness, whereas since the above modified polyisocyanate has a dispersity of 2.1 or less and a small variation in molecular weight distribution, it is inferred that the decrease in coating film hardness associated with a decrease in crosslinking density is unlikely to occur.

Since the above modified polyisocyanate has a dispersity of 2.1 or less, it also tends to have excellent stability at low temperatures.

### (Polyisocyanate (A))

Polyisocyanate (A) contains an aliphatic polyisocyanate having an aliphatic hydrocarbon group having 4 to 6 carbon atoms (hereinafter also referred to as "aliphatic polyisocyanate (a)"). Examples of aliphatic hydrocarbon groups having 4 to 6 carbon atoms include a tetramethylene group, a pentamethylene group, and a hexamethylene group. The number of isocyanate groups that the aliphatic polyisocyanate (a) has is, for example, 2 or 3, and may be 2 from the viewpoint of obtaining better storage stability. The aliphatic polyisocyanate (a) may be a polyisocyanate having no unsaturated bond from the viewpoint of weather resistance of the coating film. Examples of aliphatic polyisocyanate (a) include tetramethylene diisocyanate, pentamethylene diisocyanate, hexamethylene diisocyanate, and the like. Among these, when hexamethylene diisocyanate is used, a coating film having better hardness and excellent adhesion is easily obtained.

Polyisocyanate (A) may contain polyisocyanates other than aliphatic polyisocyanate (a). For example, polyisocyanate (A) may contain a multimer of aliphatic polyisocyanate (a). The multimer may be a dimer or a trimer or a higher multimer.

The proportion of aliphatic polyisocyanate (a) in the total polyisocyanate (A) may be 80 to 100 mass%, and may be 90 to 100 mass% or 95 to 100 mass%, based on the total mass of polyisocyanate (A), from the viewpoint of easily obtaining better coating film hardness.

### (Polyol (B))

Polyol (B) contains polytetramethylene ether glycol. Polytetramethylene ether glycol is a compound having an oxytetramethylene group in its molecular framework, and is represented by formula (I): HO-(CH₂CH₂CH₂CH₂O)n-H. n is the number of repeating units, and the average of n is 2 or more. Polytetramethylene ether glycol is mainly obtained by ring-opening polymerization of tetrahydrofuran.

The number average molecular weight of polytetramethylene ether glycol may be 200 to 800, may be 220 or more or 250 or more, may be 750 or less, 700 or less, 600 or less, or 500 or less, and may be 220 to 750, 250 to 700, 220 to 600, or 250 to 500. The larger the number average molecular weight of polytetramethylene ether glycol, the more likely the adhesion of the coating film is to be improved, and the smaller the number average molecular weight of polytetramethylene ether glycol, the more likely the low-temperature stability is to be improved and the more likely the hardness, smoothness, and appearance of the coating film are to be favorable.

The dispersity of polytetramethylene ether glycol may be 1.00 to 1.60, and may be 1.00 to 1.58, 1.00 to 1.55, 1.00 to 1.40, 1.00 to 1.20, or 1.00 to 1.10, from the viewpoint of easily obtaining better coating film hardness.

The content of 1- to 6-mers in polytetramethylene ether glycol (compounds in which n in the above formula (I) is any of 1 to 6) may be 80 mass% or more, and may be 85 mass% or more, 90 mass% or more, or 95 mass% or more, based on the total mass of polytetramethylene ether glycol, from the viewpoint that the crystallinity of the modified polyisocyanate is likely to be low and the storage stability and stability at low temperatures are likely to be better. The content of 1- to 6-mers in polytetramethylene ether glycol (compounds in which n in the above formula (I) is any of 1 to 6) may be 100 mass% or less, and may be 99 mass% or less or 98 mass% or less, from the viewpoint of easily obtaining better coating film hardness. From the above viewpoints, the content of 1- to 6-mers in polytetramethylene ether glycol (compounds in which n in the above formula (I) is any of 1 to 6) may be, for example, 80 to 100 mass%, 85 to 99 mass%, 90 to 98 mass%, or 95 to 100 mass%, based on the total mass of polytetramethylene ether glycol.

Polytetramethylene ether glycol may contain potassium, and the amount of potassium contained in polytetramethylene ether glycol may be 0.01 mass ppm or more, may be 4.5 mass ppm or less or 3.0 mass ppm or less, and may be 0 to 4.5 mass ppm or 0.01 to 3.0 mass ppm.

Polyol (B) may contain polyols other than polytetramethylene ether glycol, but from the viewpoint of obtaining a coating film with better adhesion and from the viewpoint of easily obtaining better coating film hardness, the proportion of polytetramethylene ether glycol in the total polyol (B) may be 80 to 100 mass%, and may be 90 to 100 mass% or 95 to 100 mass%, based on the total mass of polyol (B).

### (Structure)

The above modified polyisocyanate contains at least a residue of polyisocyanate (A), a residue of polyol (B), and allophanate groups. The residue of polyisocyanate (A) contains a group obtained by removing isocyanate groups from aliphatic polyisocyanate (a) (an aliphatic hydrocarbon group having 4 to 6 carbon atoms). In addition, at least a part of the residue of polyisocyanate (A) contains unreacted isocyanate groups and/or blocked isocyanate groups. The blocked isocyanate groups may be groups formed by blocking unreacted isocyanate groups with a known blocking agent. The residue of polyol (B) contains a group obtained by removing hydroxyl groups from polytetramethylene ether glycol (a polyoxytetramethylene group). The allophanate groups include, for example, allophanate groups formed by the allophanatization reaction of aliphatic polyisocyanate (a) and polytetramethylene ether glycol (allophanate groups directly bonded to the residue of aliphatic polyisocyanate (a) and the residue of polytetramethylene ether glycol). When the modified polyisocyanate contains these groups, effects are exhibited such that the modified polyisocyanate becomes a low-viscosity liquid, a coating film that is flexible yet tough and has high adhesion can be obtained, and handling properties in coating are improved.

The modified polyisocyanate may further contain urethane groups. The urethane groups may be urethane groups derived from raw materials (urethane groups that the polyisocyanate has) or may be urethane groups formed by the reaction of polyisocyanate (A) and polyol (B) in the course of the allophanatization reaction.

The modified polyisocyanate may further contain isocyanurate groups. The isocyanurate groups may be isocyanurate groups derived from raw materials (isocyanurate groups that the polyisocyanate has) or may be isocyanurate groups formed by the progress of isocyanuration of polyisocyanate (A) in the course of the allophanatization reaction.

The isocyanate group content (NCO content) may be 11.0 to 23.0 mass%, and may be 13.0 to 23.0 mass%, 14.0% to 22.0 mass%, or 15.0 to 21.0 mass%. When the NCO content is 13.0 mass% or more, the contamination resistance of the coating film tends to be better, and when the NCO content is 23.0 mass% or less, the self-healing properties of the coating film tend to be better.

In the present specification, the NCO content is a value measured by the method described in JIS K 1603-1 (polyurethane raw material aromatic isocyanate test method). However, when the modified polyisocyanate is a block-modified product, the NCO content of the modified polyisocyanate in an unblocked state (when the blocking agent is dissociated) is measured.

The average number of isocyanate groups may be 6.0 or more, and may be 6.5 or more or 7.0 or more, from the viewpoint of obtaining a coating film with better hardness and from the viewpoint of easily obtaining better coating film hardness. The average number of isocyanate groups may be 8.0 or less, and may be 7.5 or less, from the viewpoint of viscosity. From the above viewpoints, the average number of isocyanate groups may be, for example, 6.0 to 8.0, 6.5 to 7.5, or 7.0 to 8.0.

In the present specification, the average number of isocyanate groups means the average number of isocyanate groups (-NCO) contained per molecule of the modified polyisocyanate. The average number of isocyanate groups of the modified polyisocyanate can be calculated from the isocyanate group content (NCO content) and the number average molecular weight of the modified polyisocyanate. When the modified polyisocyanate is a block-modified product, the average number of isocyanate groups includes the number of blocked isocyanate groups.

The proportion of the content of allophanate groups to the total content of allophanate groups, isocyanurate groups, and urethane groups may be 75 mol% or more, and may be 80 mol% or more, 85 mol% or more, or 90 mol% or more, from the viewpoint of better adhesion of the coating film and from the viewpoint of better storage stability. The proportion of the content of allophanate groups to the total content of allophanate groups, isocyanurate groups, and urethane groups may be 98 mol% or less, and may be 95 mol% or less, from the viewpoint of better weather resistance of the coating film and from the viewpoint of easily obtaining better coating film hardness. From the above viewpoints, the proportion of the content of allophanate groups to the total content of allophanate groups, isocyanurate groups, and urethane groups may be, for example, 75 to 98 mol%, 80 to 98 mol%, 85 to 98 mol%, or 90 to 95 mol%.

The proportion of the content of urethane groups to the total content of allophanate groups, isocyanurate groups, and urethane groups is 19 mol% or less, and may be 10 mol% or less or 7 mol% or less from the viewpoint of better adhesion of the coating film and from the viewpoint of better storage stability. The proportion of the content of urethane groups to the total content of allophanate groups, isocyanurate groups, and urethane groups may be 0.01 mol% or more, and may be 0.1 mol% or more, 0.2 mol% or more, 0.5 mol% or more, 1 mol% or more, 2 mol% or more, 3 mol% or more, or 4 mol% or more, from the viewpoint of better weather resistance of the coating film and from the viewpoint of easily obtaining better coating film hardness. The reason why coating film hardness improves as the proportion of the content of the above urethane groups increases is not clear, but it is inferred that a small amount of urethane groups increases crystallinity to an extent that does not affect storage stability and improves cohesive force, thereby suppressing a decrease in coating film hardness. From the above viewpoints, the proportion of the content of urethane groups to the total content of allophanate groups, isocyanurate groups, and urethane groups may be, for example, 0.01 to 19 mol%, 0.01 to 10 mol%, 0.01 to 7 mol%, 0.1 to 19 mol%, 0.2 to 19 mol%, 0.5 to 19 mol%, 1 to 19 mol%, 2 to 19 mol%, 3 to 19 mol%, or 4 to 19 mol%.

The proportion of the content of isocyanurate groups to the total content of allophanate groups, isocyanurate groups, and urethane groups may be 0.1 mol% or more, and may be 0.5 mol% or more or 1 mol% or more, from the viewpoint of better weather resistance of the coating film and from the viewpoint of easily obtaining better coating film hardness. The proportion of the content of isocyanurate groups to the total content of allophanate groups, isocyanurate groups, and urethane groups may be 7 mol% or less, and may be 5 mol% or less or 3 mol% or less, from the viewpoint of better adhesion of the coating film and from the viewpoint of better storage stability. From the above viewpoints, the proportion of the content of isocyanurate groups to the total content of allophanate groups, isocyanurate groups, and urethane groups may be, for example, 0.1 to 7 mol%, 0.5 to 5 mol%, or 1 to 3 mol%.

The contents of allophanate groups, isocyanurate groups, and urethane groups can be confirmed by proton nuclear magnetic resonance (¹H-NMR) spectra.

### (Physical properties)

The number average molecular weight of the modified polyisocyanate may be 1500 g/mol or more, and may be 1600 g/mol or more or 1700 g/mol or more, from the viewpoint of better adhesion of the coating film. The number average molecular weight of the modified polyisocyanate may be 2000 g/mol or less, and may be 1900 g/mol or less or 1800 g/mol or less, from the viewpoint of easily obtaining better coating film hardness and from the viewpoint of better low-temperature stability. From these viewpoints, the number average molecular weight of the modified polyisocyanate may be, for example, 1500 to 2000 g/mol, 1600 to 1900 g/mol, or 1700 to 1800 g/mol.

The dispersity of the modified polyisocyanate is 1.0 to 2.1. The dispersity of the modified polyisocyanate may be 1.5 or more or 1.6 or more from the viewpoint of better heat resistance. The dispersity of the modified polyisocyanate may be 2.0 or less or 1.9 or less from the viewpoint of easily obtaining better coating film hardness and from the viewpoint of better low-temperature stability. From these viewpoints, the dispersity of the modified polyisocyanate may be, for example, 1.5 to 2.0 or 1.6 to 1.9.

The viscosity of the modified polyisocyanate at 25°C may be 500 to 10000 mPa·s, and may be 800 to 6000 mPa·s or 1000 to 3000 mPa·s. When the viscosity of the modified polyisocyanate at 25°C is within the above range, coating film forming properties become favorable, the smoothness of the coating film becomes further favorable, and the appearance of the coating film becomes further favorable. The viscosity of the modified polyisocyanate at 25°C is a value measured using a B-type viscometer.

### (Production method)

The modified polyisocyanate is obtained by the allophanatization reaction of polyisocyanate (A) and polyol (B). Specifically, for example, the modified polyisocyanate can be obtained through the following first process to fourth process.
· First process: polyisocyanate (A) and polyol (B) are charged in an amount such that the number of isocyanate groups is in excess relative to hydroxyl groups, and urethanization is allowed to proceed at 20 to 70°C to obtain an isocyanate group-terminated prepolymer I.
· Second process: a catalyst is added to the isocyanate group-terminated prepolymer I, and allophanatization is allowed to proceed at 70 to 150°C.
· Third process: the reaction is terminated by adding a reaction terminator.
· Fourth process: free polyisocyanate is removed by thin film distillation or solvent extraction to obtain a modified polyisocyanate.

In the first process to third process, the reaction proceeds under nitrogen gas or dry air flow. The first process to third process may be performed in the presence of an organic solvent or may be performed in the absence of an organic solvent.

As the organic solvent, various organic solvents that do not affect the reaction can be used. Examples of organic solvents include aliphatic hydrocarbons such as octane; alicyclic hydrocarbons such as cyclohexane and methylcyclohexane; ketones such as methyl isobutyl ketone and cyclohexanone; esters such as butyl acetate and isobutyl acetate; glycol ether esters such as ethylene glycol ethyl ether acetate, propylene glycol monomethyl ether acetate, 3-methyl-3-methoxybutyl acetate, and ethyl-3-ethoxypropionate; ethers such as dioxane; halogenated hydrocarbons such as methylene iodide and monochlorobenzene; and polar aprotic solvents such as N-methylpyrrolidone, dimethylformamide, dimethylacetamide, dimethylsulfoxide, and hexamethylphosphonylamide. These organic solvents may be used alone or in combination of two or more.

### [First process]

In the first process, an isocyanate group-terminated prepolymer I is obtained by reacting polyisocyanate (A) and polyol (B). The amount of polyisocyanate (A) and polyol (B) charged is an amount such that the number of isocyanate groups is in excess relative to hydroxyl groups.

The "amount such that the number of isocyanate groups is in excess relative to hydroxyl groups" may be an amount at which the ratio R' (=M'_{NCO}/M'_{OH}) of the number of moles (M'_{NCO}) of isocyanate groups in polyisocyanate (A) to the number of moles (M'_{OH}) of hydroxyl groups in polyol (B) is 6 to 60, and may be an amount at which the ratio R' is 7 to 50. When the ratio R' is 6 or more, it is possible to further suppress excessive isocyanurate groups in the obtained modified polyisocyanate. When the ratio R' is 60 or less, an increase in the amount of urethane groups contained in the obtained modified polyisocyanate is further suppressed, a decrease in the number of functional groups is further suppressed, and the productivity and yield are further improved.

The temperature at which polyisocyanate (A) and polyol (B) are reacted (urethanization temperature) is, for example, 20 to 70°C, and may be 20 to 60°C, 45 to 65°C, or 50 to 60°C. By setting the urethanization temperature to 70°C or lower, the content of urethane groups in the finally obtained modified polyisocyanate can be reduced, and the content of isocyanate groups can be increased. This is considered to be because the lower the urethanization temperature, the more the occurrence of side reactions in the urethanization reaction (for example, reactions that generate intermediate compounds that have formed ring structures, such as dimers and trimers of polyisocyanate (A), urethanization reactions between such intermediate compounds and polyol (B), and the like) is suppressed. That is, among the compounds produced by side reactions, in particular, urethane compounds having ring structures have poor compatibility with allophanatization catalysts, and therefore it is considered that when such urethane compounds increase, the allophanatization catalyst does not function and urethane groups tend to remain. The reaction time for urethanization varies depending on the presence or absence of a catalyst, the type, and the temperature, but is generally within 10 hours and may be 1 to 5 hours.

A known urethanization catalyst can be used during urethanization. Examples of urethanization catalysts include organometallic compounds such as dibutyltin diacetate, dibutyltin dilaurate, and dioctyltin dilaurate; and organic amines such as triethylenediamine and triethylamine and salts thereof. These catalysts may be used alone or in combination of two or more.

### [Second process]

In the second process, allophanatization of the isocyanate group-terminated prepolymer I obtained in the first process is performed. At this time, allophanatization may be performed simultaneously (in parallel) with urethanization, or may be performed after urethanization is completed.

When urethanization and allophanatization are performed simultaneously (in parallel), the reaction may be performed in the presence of a urethanization catalyst and an allophanatization catalyst. On the other hand, when allophanatization is performed after urethanization is completed, in the presence of a urethanization catalyst and in the absence of an allophanatization catalyst, after urethanization is performed for a predetermined time, an allophanatization catalyst may be added to perform allophanatization.

As the allophanatization catalyst, one appropriately selected from among known catalysts can be used. For example, metal salts of carboxylic acid (metal salts of alkali metals such as lithium, sodium, and potassium; metal salts of alkaline earth metals such as magnesium, calcium, and barium; metal salts of other typical metals such as tin and lead; metal salts of transition metals such as manganese, iron, cobalt, nickel, copper, zinc, and zirconium; etc.) can be used. Examples of carboxylic acids include monocarboxylic acids and polycarboxylic acids.

Specific examples of allophanatization catalysts include zirconium octylate and the like. The allophanatization catalyst may be used alone or in combination of two or more.

The amount of the allophanatization catalyst used based on the total mass of polyisocyanate (A) and polyol (B) may be 0.001 to 0.1 mass%, and may be 0.005 to 0.03 mass%. When the amount of the allophanatization catalyst used is 0.001 mass% or more, allophanatization proceeds more easily, the content of urethane groups in the obtained modified polyisocyanate can be reduced, and a decrease in the average number of isocyanate groups can be suppressed. In addition, when the amount of the allophanatization catalyst used is 0.1 mass% or less, the storage stability is further improved.

The reaction temperature for allophanatization may be 70 to 150°C, and may be 90 to 130°C. When the reaction temperature is 70°C or higher, the content of allophanate groups in the obtained modified polyisocyanate tends to be high, and the content of urethane groups can be reduced. In addition, when the reaction temperature is 150°C or lower, the content of isocyanurate can be reduced, and adhesion is further improved.

Allophanatization may be performed until urethane groups are substantially absent. Here, "urethane groups are substantially absent" means that the content of the urethane-modified polyisocyanate confirmed by proton nuclear magnetic resonance (¹H-NMR) spectra is 0.01 mol% or less based on the total amount of allophanate-modified polyisocyanate, isocyanurate-modified polyisocyanate, and urethane-modified polyisocyanate.

In the second process, allophanatization mainly proceeds, but as described above, by adjusting the ratio R' (=M'_{NCO}/M'_{OH}) in the first process, isocyanuration can also be partially allowed to proceed, and the proportion of the content of isocyanurate groups can be adjusted.

### [Third process]

In the third process, after the second process, a reaction terminator that deactivates the catalyst is added to the reaction system to terminate allophanatization. The addition of the reaction terminator may be performed at the timing when the proportion of the content of urethane groups reaches a desired proportion. However, in order to suppress the progress of side reactions, it is preferable to add the reaction terminator promptly after allophanatization is completed.

As the reaction terminator, known compounds, for example, inorganic acids such as phosphoric acid and hydrochloric acid, organic acids having a sulfonic acid group, a sulfamic acid group, and the like, esters thereof, and acyl halides can be used. These may be used alone or in combination of two or more.

The amount of the reaction terminator added varies depending on the type of the catalyst, but may be 0.5 to 10 equivalents, and may be 0.8 to 5.0 equivalents, with respect to the amount of the catalyst added. When the amount of the reaction terminator added is 0.5 equivalents or more, the storage stability of the obtained modified polyisocyanate is further improved. When the amount of the reaction terminator added is 10 equivalents or less, coloration can be further suppressed. After the reaction is terminated, a purification process in which the free unreacted polyisocyanate (A) is removed can be performed.

### [Fourth process]

In the fourth process, the free unreacted polyisocyanate (A) present in the reaction mixture is removed. In addition, when an organic solvent is used in the reaction process, it can be removed in this purification process.

Polyisocyanate (A) is preferably removed to a residual content of 1.0 mass% or less, and more preferably removed to a residual content of less than 1.0 mass%. When the residual content is 1.0 mass% or less, the odor is further reduced, and the storage stability is further improved.

Removal of polyisocyanate (A) is preferably performed by thin film distillation. Thin film distillation can be performed, for example, by thin film distillation under a high vacuum of 10 to 100 Pa at 120 to 140°C.

After the fourth process, a process of modifying (blocking) some isocyanate groups with a blocking agent may be performed. Examples of blocking agents include phenol-based blocking agents such as phenol, cresol, xylenol, nitrophenol, chlorophenol, ethylphenol, p-hydroxydiphenyl, t-butylphenol, o-isopropylphenol, o-sec-butylphenol, p-nonylphenol, p-t-octylphenol, hydroxybenzoic acid, and a hydroxybenzoic acid ester; lactam-based blocking agents such as ε-caprolactam, δ-valerolactam, γ-butyrolactam, and β-propiolactam; active methylene-based blocking agents such as diethyl malonate, dimethyl malonate, ethyl acetoacetate, methyl acetoacetate, and acetylacetone; alcohol-based blocking agents such as methanol, ethanol, n-propyl alcohol, isopropyl alcohol, n-butyl alcohol, isobutyl alcohol, t-butyl alcohol, n-amyl alcohol, t-amyl alcohol, lauryl alcohol, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, benzyl alcohol, methoxymethanol, glycolic acid esters such as glycolic acid, methyl glycolate, ethyl glycolate, and butyl glycolate, lactate esters such as lactic acid, methyl lactate, ethyl lactate, and butyl lactate, methylol urea, methylol melamine, diacetone alcohol, ethylene chlorohydrin, ethylene bromohydrin, 1,3-dichloro-2-propanol, ω-hydroperfluoroalcohol, and acetone cyanohydrin; mercaptan-based blocking agents such as butyl mercaptan, hexyl mercaptan, t-butyl mercaptan, t-dodecyl mercaptan, 2-mercaptobenzothiazole, thiophenol, methylthiophenol, and ethylthiophenol; acid amide-based blocking agents such as acetanilide, acetanisidide, acetotoluide, acrylamide, methacrylamide, acetic acid amide, stearic acid amide, and benzamide; imide-based blocking agents such as succinimide, phthalimide, and maleimide; amine-based blocking agents such as diphenylamine, phenylnaphthylamine, xylidine, N-phenylxylidine, carbazole, aniline, naphthylamine, butylamine, dibutylamine, and butylphenylamine; imidazole-based blocking agents such as imidazole and 2-ethylimidazole; urea-based blocking agents such as urea, thiourea, ethyleneurea, ethylenethiourea, and 1,3-diphenylurea; carbamate-based blocking agents such as phenyl N-phenylcarbamate and 2-oxazolidone; imine-based blocking agents such as ethylene imine and propylene imine; oxime-based blocking agents such as formamidoxime, acetaldoxime, acetoxime, methyl ethyl ketoxime, diacetyl monoxime, benzophenone oxime, and cyclohexanone oxime; and sulfite-based blocking agents such as sodium bisulfite and potassium bisulfite. These blocking agents may be used alone or in combination of two or more.

### <Curing agent>

Another embodiment of the present disclosure is a curing agent containing the above modified polyisocyanate. The curing agent is used in combination with a compound having reactivity with polyisocyanate (for example, a polyol). Here, the modified polyisocyanate of the present embodiment may be the modified polyisocyanate composition of the above embodiment. That is, in the following description, the modified polyisocyanate may be read as the modified polyisocyanate composition.

The curing agent may be composed of only the modified polyisocyanate. The curing agent may contain components other than the modified polyisocyanate (for example, polyisocyanates other than the modified polyisocyanate). However, from the viewpoint of enhancing the effects of the modified polyisocyanate, the content of the modified polyisocyanate may be 80 mass% or more, and may be 90 mass% or more or 95 mass% or more, based on the total mass of the polyisocyanate contained in the curing agent.

The curing agent may further contain additives. The additives may be any additives as long as they do not have reactivity with polyisocyanate, and for example, the same additives as those that can be used in the polyurethane resin-forming composition described below can be used.

### <Polyurethane resin-forming composition>

Another embodiment of the present disclosure is a polyurethane resin-forming composition containing the above modified polyisocyanate and a polyol. This polyurethane resin-forming composition forms a polyurethane resin by the reaction of the modified polyisocyanate and the polyol. Here, the modified polyisocyanate of the present embodiment may be the modified polyisocyanate composition of the above embodiment. That is, in the following description, the modified polyisocyanate may be read as the modified polyisocyanate composition.

The polyol may be a known polyol used for forming a polyurethane resin. From the viewpoint of easily obtaining a coating film having excellent adhesion and hardness, the polyol may contain an acrylic polyol. Here, "acrylic polyol" means a polymer containing a (meth)acrylic monomer as a monomer unit and having a plurality of hydroxyl groups. In addition, "(meth)acryl" means at least one of acryl and its corresponding methacryl.

The acrylic polyol may be a homopolymer obtained by polymerizing one (meth)acrylic monomer or may be a copolymer obtained by copolymerizing two or more (meth)acrylic monomers. The acrylic polyol may contain monomers other than (meth)acrylic monomers as monomer units, but from the viewpoint of achieving both a predetermined glass transition temperature and hydroxyl value, it may contain only (meth)acrylic monomers as monomer units.

Examples of homopolymers obtained by polymerizing one (meth)acrylic monomer include a homopolymer of a (meth)acrylic acid hydroxy compound. Examples of copolymers obtained by copolymerizing two or more (meth)acrylic monomers include a copolymer obtained by copolymerizing a (meth)acrylic acid ester and a (meth)acrylic acid hydroxy compound.

Here, the (meth)acrylic acid ester is at least one selected from the group consisting of acrylic acid esters and methacrylic acid esters. The (meth)acrylic acid hydroxy compound is at least one selected from the group consisting of acrylic acid hydroxy compounds and methacrylic acid hydroxy compounds, which has one or more hydroxyl groups in its molecule that can serve as reaction sites.

The glass transition temperature (glass transition point, Tg) of the acrylic polyol may be 5 to 30°C. When the glass transition temperature of the acrylic polyol is 5°C or higher, self-healing properties against repeated scratches and contamination resistance during use outdoors are improved. In addition, when the glass transition temperature of the acrylic polyol is 30°C or lower, self-healing properties at room temperature (for example, 5 to 35°C) and a low temperature (for example, lower than 5°C) are improved. The glass transition temperature of the acrylic polyol may be 10°C or higher or 15°C or higher from the viewpoint of further improving self-healing properties against repeated scratches and contamination resistance during use outdoors. The glass transition temperature of the acrylic polyol may be 25°C or lower or 20°C or lower from the viewpoint of further improving self-healing properties at room temperature and a low temperature. From the above viewpoints, the glass transition temperature of the acrylic polyol may be 10 to 25°C or 15 to 20°C. A polyol having a glass transition temperature within the above range can be synthesized by adjusting the type and mixing ratio of monomer components, and for example, when the acrylic polyol is a copolymer, the glass transition temperature is estimated by the Fox equation, and when the mixing ratio of monomer components is set, it is possible to obtain an acrylic polyol having a glass transition temperature within the above range.

The glass transition temperature of the above acrylic polyol is determined by measuring the inflection point of DSC in accordance with JIS K 7121.

The hydroxyl value of the acrylic polyol may be 50 mg KOH/g or more, and may be 150 mg KOH/g or less. When the hydroxyl value of the acrylic polyol is within such a range, adhesion, coating film hardness, and smoothness are improved. The hydroxyl value of the acrylic polyol may be 80 mg KOH/g or more or 100 mg KOH/g or more from the viewpoint of further improving coating film hardness and smoothness. The hydroxyl value of the acrylic polyol may be 130 mg KOH/g or less or 110 mg KOH/g or less from the viewpoint of further improving adhesion. From the above viewpoints, the hydroxyl value of the acrylic polyol may be 50 to 150 mg KOH/g, 80 to 150 mg KOH/g, 100 to 150 mg KOH/g, 80 to 130 mg KOH/g, 100 to 130 mg KOH/g or less, or 100 to 110 mg KOH/g or less. The hydroxyl value of the above acrylic polyol is a value measured by the method according to JIS K 1557.

The acrylic polyol can be obtained by, for example, imparting energy (light energy such as ultraviolet rays and electron beams, heat energy, etc.) to a mixture of (meth)acrylic monomers and a polymerization initiator and polymerizing (meth)acrylic monomers. In other words, the acrylic polyol may be a thermopolymerized polymer or a photopolymerized polymer. The acrylic polyol may be a thermopolymerized polymer because it tends to be a polymer in which the polymerization reaction and the crosslinking reaction are completed.

The acrylic polyol may contain one type of acrylic polyol alone or a combination of two or more types thereof.

Next, the (meth)acrylic acid ester and the (meth)acrylic acid hydroxy compound that can be reaction raw materials for the acrylic polyol, and the polymerization initiator will be described.

### [(Meth)acrylic acid ester]

Examples of (meth)acrylic acid esters include an alkyl ester having an alkyl group having 1 to 20 carbon atoms. Examples of such (meth)acrylic acid esters include (meth)acrylic acid alkyl esters such as methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, octyl (meth)acrylate, nonyl (meth)acrylate, decyl (meth)acrylate, and dodecyl (meth)acrylate; (meth)acrylic acid cycloalkyl esters such as cyclohexyl (meth)acrylate (products obtained by an esterification reaction between (meth)acrylic acid and an alicyclic alcohol); and (meth)acrylic acid aryl esters such as phenyl (meth)acrylate and benzyl (meth)acrylate. Such (meth)acrylic acid esters may be used alone or in combination of two or more.

### [(Meth)acrylic acid hydroxy compound]

The (meth)acrylic acid hydroxy compound has one or more hydroxyl groups in the molecule that can serve as reaction sites with the polyisocyanate composition. Examples of (meth)acrylic acid hydroxy compounds include acrylic acid hydroxy compounds such as 2-hydroxyethyl acrylate, 2-hydroxypropyl acrylate, 4-hydroxybutyl acrylate, 3-hydroxy-2,2-dimethylpropyl acrylate, and pentaerythritol triacrylate; and methacrylic acid hydroxy compounds such as 2-hydroxyethyl methacrylate, 2-hydroxypropyl methacrylate, 4-hydroxybutyl methacrylate, 3-hydroxy-2,2-dimethylpropyl methacrylate, and pentaerythritol trimethacrylate. These (meth)acrylic acid hydroxy compounds may be used alone or in combination of two or more.

### [Polymerization initiator]

Examples of polymerization initiators include thermal polymerization initiators and photopolymerization initiators. The polymerization initiator is appropriately selected depending on polymerization methods.

Examples of thermal polymerization initiators include peroxydicarbonates such as di-2-ethylhexyl peroxydicarbonate; peroxyesters such as t-butyl peroxybenzoate, t-butyl peroxy-2-ethylhexanoate, t-butylperoxyisopropyl carbonate, and t-hexylperoxyisopropyl carbonate; and peroxyketals such as di(t-butylperoxy)-2-methylcyclohexane, di(t-butylperoxy)3,3,5-trimethylcyclohexane, and di(t-butylperoxy)cyclohexane.

Examples of photopolymerization initiators include acetophenones such as acetophenone, methoxyacetophenone, 2,2-diethoxyacetophenone, p-dimethylaminoacetophenone, 2,2-dimethoxy-2-phenylacetophenone, α-hydroxy-α,α'-dimethylacetophenone, 2-hydroxy-2-cyclohexylacetophenone, and 2-methyl-1[4-(methylthio)phenyl]-2-morpholinopropanone-1; benzoin ethers such as benzoin, benzoin methyl ether, benzoin ethyl ether, and benzoin isopropyl butyl ether; ketones such as benzophenone, 2-chlorobenzophenone, p,p'-dichlorobenzophenone, N,N'-tetramethyl-4,4'-diaminobenzophenone, and 4-(2-hydroxyethoxy)phenyl(2-hydroxy-2-propyl)ketone; thioxanthones such as thioxanthone, 2-chlorothioxanthone, and 2-methylthioxanthone; phosphine oxides such as bisacylphosphine oxide and benzoylphosphine oxide; ketals such as benzyl dimethyl ketal; and quinones such as camphane-2,3-dione and phenanthrenequinone.

### (Other components)

The polyurethane resin-forming composition may contain polyisocyanates other than the above modified polyisocyanate. However, from the viewpoint of enhancing the effects of the modified polyisocyanate, the content of the modified polyisocyanate may be 80 mass% or more, and may be 90 mass% or more or 95 mass% or more, based on the total mass of the polyisocyanate.

The polyurethane resin-forming composition may contain various additives depending on its application. Examples of additives include antioxidants such as 2,6-di-tert-butyl-4-methylphenol, UV absorbers, pigments, dyes, solvents, flame retardants, hydrolysis inhibitors, lubricants, plasticizers, fillers, antistatic agents, dispersants, catalysts, storage stabilizers, and thickeners.

As the catalyst, a known urethanization catalyst can be used. For example, organometallic compounds such as dibutyltin diacetate, dibutyltin dilaurate, and dioctyltin dilaurate, and organic amines such as triethylenediamine, triethylamine, diazabicycloundecene, and diazabicyclononene and salts thereof can be used. These catalysts may be used alone or in combination of two or more.

### (M_{NCO}/M_{OH})

The ratio R (=M_{NCO}/M_{OH}) of the number of moles (M_{NCO}) of isocyanate groups in the isocyanate group-containing compound contained in the polyurethane resin-forming composition to the number of moles (M_{OH}) of hydroxyl groups in the hydroxyl group-containing compound contained in the polyurethane resin-forming composition may be 0.8 or more, and may be 0.9 or more or 1.0 or more, from the viewpoint of further suppressing excessive hydroxyl groups, further improving water resistance and moist heat resistance, further suppressing a decrease in crosslinking density, and further improving durability (contamination resistance, etc.) and the mechanical strength of the coating film. The ratio R may be 1.3 or less, and may be 1.2 or less or 1.1 or less, from the viewpoint of further suppressing excessive isocyanate groups, suppressing excessive generation of isocyanurate groups and urea groups, and further improving flexibility and self-healing properties of the coating film. From the above viewpoints, the ratio R may be 0.8 to 1.3, 0.9 to 1.2, or 1.0 to 1.1.

From the same viewpoints as above, the ratio of the number of moles of isocyanate groups in the modified polyisocyanate to the number of moles of hydroxyl groups in the polyol may be 0.8 to 1.3.

The polyurethane resin-forming composition may be a one-component composition in which all constituent components are contained in one liquid, or may be a multi-component composition in which the constituent components are present separately in a plurality of liquids. The polyurethane resin-forming composition may contain, for example, a first liquid containing the modified polyisocyanate and a second liquid containing the polyol. The polyurethane resin-forming composition may contain the above first liquid, the above second liquid, and a third liquid other than these. When the polyurethane resin-forming composition is a multi-component composition, other constituent components (such as catalysts) may be contained in the first liquid, the second liquid, or the third liquid.

### <Coating material composition>

Another embodiment of the present disclosure is a coating material composition containing the above polyurethane resin-forming composition. This coating material composition cures while forming a polyurethane resin by the reaction of the modified polyisocyanate and the polyol.

According to the above coating material composition, a coating film having sufficient hardness can be obtained. In addition, according to the above coating material composition, a coating film having excellent self-healing properties, contamination resistance, smoothness, and adhesion is easily obtained. Therefore, the above coating material composition can be used for forming surface coating films of members of vehicle exterior materials for which fine processability, favorable design properties, and weight reduction of exterior parts are required, and plastic molded articles.

### <Coating film>

Another embodiment of the present disclosure is a coating film containing a cured product of the above coating material composition. This coating film may be a so-called self-healing type coating film.

The above coating film can exhibit self-healing properties within 1 hour, for example, at room temperature (for example, 5 to 35°C) or when heated at 40 to 60°C. In addition, the above coating film can exhibit favorable smoothness under high humidity conditions and favorable contamination resistance. The inventors speculate that the smoothness is improved by improving drying properties and moisture resistance, and the contamination resistance is improved by increasing the crosslinking density.

The cured product of the coating material composition contains a polyurethane resin having a urethane structure produced by urethanization of the modified polyisocyanate and the polyol. The urethane structure contained in the polyurethane resin includes, in addition to the urethane group (-CONH-), the reaction residue of the modified polyisocyanate and the reaction residue of the polyol.

The thickness of the coating film is, for example, 5 to 40 µm. The coating film may be a thin film having a thickness of less than 20 µm.

The coating film can be formed by a method including applying the above coating material composition onto an adherend and curing it. In this method, an article including the adherend and the coating film formed on the adherend is obtained.

Examples of adherends include molded articles molded from materials such as stainless steel, phosphate-treated steel, zinc steel, iron, copper, aluminum, brass, glass, acrylic polyols, polycarbonate resins, polyethylene terephthalate resins, polyethylene naphthalate resins, polybutylene phthalate resins, polystyrene resins, AS resins, ABS resins, polycarbonate-ABS resins, 6-nylon resins, 6,6-nylon resins, MXD6 nylon resins, polyvinyl chloride resins, polyvinyl alcohol resins, polyurethane resins, phenolic resins, melamine resins, polyacetal resins, chlorinated polyolefin resins, polyolefin resins, polyamide resins, polyether ether ketone resins, polyphenylene sulfide resins, NBR resins, chloroprene resins, SBR resins, and SEBS resins, and surface-treated products of the molded articles. The surface-treated product may be a molded article (surface-treated molded article) of an olefin resin such as polyethylene or polypropylene that has been subjected to a surface treatment such as a corona discharge treatment.

The adherend may have another coating film on its surface that can serve as an intermediate forming layer. In other words, the coating material composition may be applied directly onto the surface of the above molded article or may be applied onto another coating film that has been base-coated on the surface of the above molded article. The other coating film may be a single layer or multiple layers.

The coating material composition may be applied by a method such as spraying, brushing, or immersion.

The coating material composition may be cured, for example, by heating. Heating for curing may be heating for drying. That is, when the coating material composition contains a solvent, curing of the coating material composition may be performed simultaneously (in parallel) with drying for removing the solvent. The heating temperature may be, for example, 60 to 150°C. The heating time may be, for example, 1 to 10 hours.

### [Examples]

Hereinafter, examples according to the present disclosure will be described, but the present disclosure should not be construed as being limited to these examples.

### <Preparation of polytetramethylene ether glycol>

The following polytetramethylene ether glycols (PTMG 1 to 6) were prepared.
· PTMG 1 (manufactured by Mitsubishi Chemical Corporation, polytetramethylene ether glycol, product name: PTMG-250, number average molecular weight (Mn) = 225, dispersity (Mw/Mn) = 1.04, content of 1- to 6-mers = 99 mass%, potassium content = 0.1 mass ppm)
· PTMG 2 (manufactured by BASF, polytetramethylene ether glycol, product name: PolyTHF250, number average molecular weight (Mn) = 250, dispersity (Mw/Mn) = 1.04, content of 1- to 6-mers = 98 mass%, potassium content = 1.4 mass ppm)
· PTMG 3 (manufactured by PTG, polytetramethylene ether glycol, product name: PTMEG-220, number average molecular weight (Mn) = 220, dispersity (Mw/Mn) = 1.03, content of 1- to 6-mers = 99 mass%, potassium content = 4.3 mass ppm)
· PTMG 4 (manufactured by Hodogaya Chemical Co., Ltd., polytetramethylene ether glycol, product name: TERATHANE PTMEG250, number average molecular weight (Mn) = 250, dispersity (Mw/Mn) = 1.65, content of 1- to 6-mers = 81 mass%, potassium content = 2.4 mass ppm, TERATHANE is a registered trademark)
· PTMG 5 (manufactured by Mitsubishi Chemical Corporation, polytetramethylene ether glycol, product name: PTMG1000, number average molecular weight (Mn) = 1000, dispersity (Mw/Mn) = 1.67, content of 1- to 6-mers = 8 mass%, potassium content = 0.1 mass ppm)
· PTMG 6 (manufactured by Mitsubishi Chemical Corporation, polytetramethylene ether glycol, product name: PTMG-650, number average molecular weight (Mn) = 650, dispersity (Mw/Mn) = 1.55, content of 1- to 6-mers = 18 mass%, potassium content = 0.1 mass ppm)

**[Table 1]**

| | Mn (g/mol) | Mw/Mn |
|---|---|---|
| PTMG 1 | 225 | 1.04 |
| PTMG 2 | 250 | 1.04 |
| PTMG 3 | 220 | 1.03 |
| PTMG 4 | 250 | 1.65 |
| PTMG 5 | 1000 | 1.67 |
| PTMG 6 | 650 | 1.55 |

### <Example 1>

### (Synthesis of modified polyisocyanate)

890 g of hexamethylene diisocyanate (manufactured by Tosoh Corporation, NCO content: 49.9 mass%, hereinafter referred to as "HDI") and 110 g of PTMG 1 were charged into a four-neck flask equipped with a stirrer, a thermometer, a condenser, and a nitrogen gas inlet tube and having a capacity of 1 L, and heated to 60°C under a nitrogen gas flow, and then 0.05 g of zirconium octylate (product name: Zirconyl Octoate, manufactured by Daiichi Kigenso Kagaku Kogyo Co., Ltd., hereinafter referred to as "OctZr") was added, and the mixture was stirred at 110°C for 2 hours. Then, 0.5 g of JP-508 (product name, manufactured by Johoku Chemical Co., Ltd., acid phosphate ester), which is a reaction terminator, was added, and the mixture was stirred at 80°C for 2 hours. After the reaction solution was cooled, excess HDI was removed by thin film distillation (conditions: 130°C, 0.04 kPa) to obtain 370 g of modified polyisocyanate P1. The properties of the obtained modified polyisocyanate P1 are shown in Table 2. Here, in the present examples, the properties of the modified polyisocyanate were measured by the following methods.

### (Measurement of allophanate group/isocyanurate group/urethane group molar ratio)

The molar ratio of each functional group (isocyanurate groups, allophanate groups, and urethane groups, respectively) to a total of 100 mol% of isocyanurate groups, allophanate groups, and urethane groups in the modified polyisocyanate was determined by the ¹H-NMR method using ECX400M (product name) manufactured by JEOL Ltd. Specifically, the measurement sample was measured by ¹H-NMR, the signal area of hydrogen atoms of methylene groups adjacent to nitrogen atoms of isocyanurate rings was determined, and the molar ratios of isocyanurate groups, allophanate groups, and urethane groups were calculated by the following formulas. The measurement sample was prepared by dissolving the modified polyisocyanate in deuterated chloroform containing 0.2 mass% of tetramethylsilane. The sample concentration was 0.02 g/1 mL mass%. The chemical shift reference was set to 0 ppm for the signal of hydrogen atoms of tetramethylsilane. 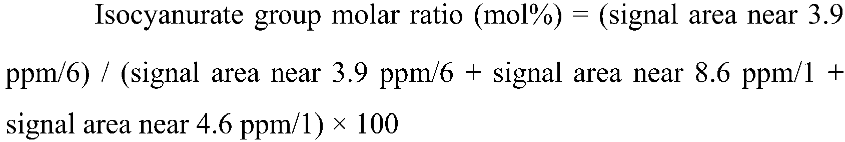 Isocyanurate group molar ratio (mol%) = (signal area near 3.9 ppm/6) / (signal area near 3.9 ppm/6 + signal area near 8.6 ppm/1 + signal area near 4.6 ppm/1) × 100 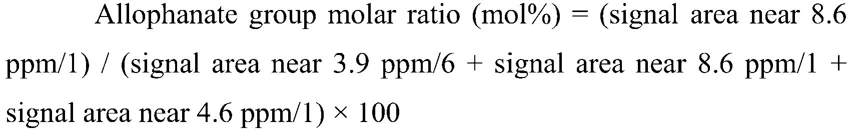 Allophanate group molar ratio (mol%) = (signal area near 8.6 ppm/1) / (signal area near 3.9 ppm/6 + signal area near 8.6 ppm/1 + signal area near 4.6 ppm/1) × 100 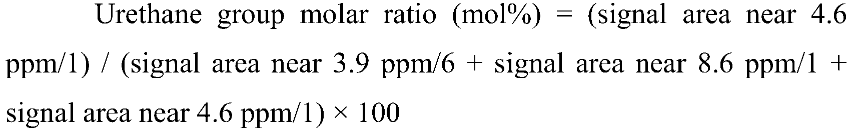 Urethane group molar ratio (mol%) = (signal area near 4.6 ppm/1) / (signal area near 3.9 ppm/6 + signal area near 8.6 ppm/1 + signal area near 4.6 ppm/1) × 100

### (Measurement of molecular weight)

The number average molecular weight (Mn) and weight average molecular weight (Mw) disclosed in the present examples were measured under the following conditions, and the dispersity (Mw/Mn) was determined from these measured values.

### [Conditions]

· Measurement instrument: "HLC-8120" (manufactured by Tosoh Corporation)
· Column: "TSKguardcolumn HXL-L" (manufactured by Tosoh Corporation)
   Particle size=6 µm, size=6 mm ID×30 cm×4 columns
· Carrier: tetrahydrofuran (THF)
· Detector: differential refractive index
· Sample: 0.1% THF solution
· Calibration curve: polystyrene

### (Measurement of content of 1- to 6-mers of polytetramethylene ether glycol)

The content of 1- to 6-mers of polytetramethylene ether glycol was determined from the area of the differential refractive index peak on the GPC chromatogram obtained by the above molecular weight measurement. Specifically, the differential refractive index peak of the monomer appears at a retention time of approximately 37.6 minutes, the differential refractive index peak of the dimer appears at a retention time of approximately 37.1 minutes, the differential refractive index peak of the trimer appears at approximately 36.1 minutes, the differential refractive index peak of the tetramer appears at approximately 34.9 minutes, the differential refractive index peak of the pentamer appears at approximately 33.9 minutes, the differential refractive index peak of the hexamer appears at approximately 33.1 minutes, and the differential refractive index peaks of multimers of heptamer or higher appear in the range of approximately 27.6 to approximately 32.5 minutes, and therefore the content of 1- to 6-mers was calculated based on the following formula. 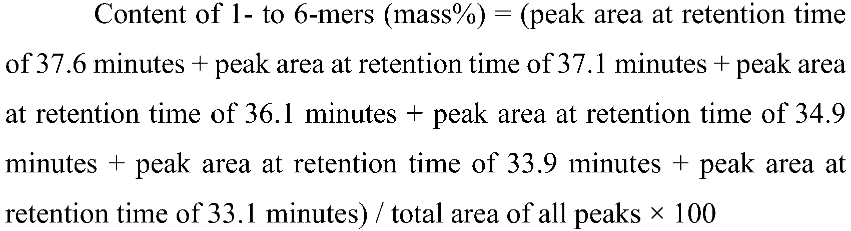 Content of 1- to 6-mers (mass%) = (peak area at retention time of 37.6 minutes + peak area at retention time of 37.1 minutes + peak area at retention time of 36.1 minutes + peak area at retention time of 34.9 minutes + peak area at retention time of 33.9 minutes + peak area at retention time of 33.1 minutes) / total area of all peaks × 100

### (Measurement of NCO content)

The NCO content disclosed in the present examples was measured in accordance with the method described in JIS K 1603-1 (polyurethane raw material aromatic isocyanate test method).

### (Average number of isocyanate groups)

The average number of isocyanate groups disclosed in the present examples was calculated by the following formula. 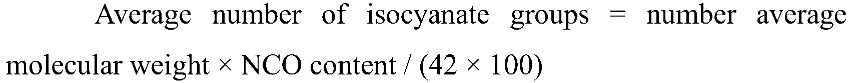 Average number of isocyanate groups = number average molecular weight × NCO content / (42 × 100)

### (Measurement of viscosity)

The viscosity disclosed in the present examples was obtained by measuring the viscosity at 25°C with a No. 4 rotor using a B-type viscometer (manufactured by Tokyo Keiki Co., Ltd., model "DVL-BII type").

### (Measurement of turbidity)

The turbidity disclosed in the present examples was obtained by measuring the kaolin turbidity (visual method) in accordance with JIS-K0101 for the polyisocyanate composition stored at 5°C for 24 hours. When the turbidity is 2 or less, the low-temperature stability can be said to be favorable.

### (Measurement of potassium content)

The potassium content disclosed in the present examples was obtained by measuring the potassium ion concentration of a solution obtained by ashing a sample (polytetramethylene ether glycol or polyisocyanate composition) and then dissolving it in acid, using ICP-AES (Optima 8300, manufactured by PerkinElmer, Inc.).

### <Example 2>

Except for using PTMG 2 instead of PTMG 1, the same procedure as in Example 1 was followed to obtain 360 g of modified polyisocyanate P2. The properties of the obtained modified polyisocyanate P2 are shown in Table 2.

### <Example 3>

Except for changing the stirring time after adding 0.05 g of OctZr to 1 hour, the same procedure as in Example 2 was followed to obtain 320 g of modified polyisocyanate P3. The properties of the obtained modified polyisocyanate P3 are shown in Table 2.

### <Example 4>

Except for changing the stirring time after adding 0.05 g of OctZr to 3 hours, the same procedure as in Example 2 was followed to obtain 390 g of modified polyisocyanate P4. The properties of the obtained modified polyisocyanate P4 are shown in Table 2.

### <Example 5>

Except for using PTMG 3 instead of PTMG 1, the same procedure as in Example 1 was followed to obtain 360 g of modified polyisocyanate P5. The properties of the obtained modified polyisocyanate P5 are shown in Table 2.

### <Example 6>

Except for using PTMG 6 instead of PTMG 1, the same procedure as in Example 1 was followed to obtain 360 g of modified polyisocyanate P6. The properties of the obtained modified polyisocyanate P6 are shown in Table 2.

### <Comparative Example 1>

Except for using PTMG 4 instead of PTMG 1, the same procedure as in Example 1 was followed to obtain 360 g of modified polyisocyanate P7. The properties of the obtained modified polyisocyanate P7 are shown in Table 2.

### <Comparative Example 2>

Except for changing the stirring time after adding 0.05 g of OctZr to 30 minutes, the same procedure as in Example 2 was followed to obtain 250 g of modified polyisocyanate P8. The properties of the obtained modified polyisocyanate P8 are shown in Table 2.

### <Comparative Example 3>

Except for using PTMG 5 instead of PTMG 1, the same procedure as in Example 1 was followed to obtain 360 g of modified polyisocyanate P9. The properties of the obtained modified polyisocyanate P9 are shown in Table 2.

**[Table 2]**

| | PTMG type | Molar ratio (%) | | | Mn (g/mol) | Mw/Mn | NCO content (%) | Average number of isocyanate groups | Viscosity (mPa·s) | Turbidity | Potassium content [ppm] |
|---|---|---|---|---|---|---|---|---|---|---|---|
| | | Isocyanurate groups | Allophanate groups | Urethane groups | | | | | | | |
| Example 1 | PTMG 1 | 2.0 | 93.3 | 4.7 | 1800 | 1.9 | 16.3 | 7 | 1800 | 0 | 0.1 |
| Example 2 | PTMG 2 | 1.5 | 93.0 | 5.5 | 1740 | 1.6 | 16.7 | 6.9 | 1600 | 0 | 1.1 |
| Example 3 | PTMG 2 | 1.8 | 79.8 | 18.4 | 1600 | 1.5 | 16.3 | 6.2 | 1310 | 0 | 1.1 |
| Example 4 | PTMG 2 | 4.1 | 95.7 | 0.2 | 1960 | 1.9 | 16.4 | 7.7 | 1600 | 0 | 1.1 |
| Example 5 | PTMG 3 | 6.4 | 91.5 | 2.1 | 1900 | 1.8 | 16.5 | 7.5 | 1900 | 0 | 3.5 |
| Example 6 | PTMG 6 | 2.0 | 93.0 | 5.0 | 2000 | 2.1 | 12.0 | 6.2 | 2100 | 0 | 0.1 |
| Comparative Example 1 | PTMG 4 | 3.6 | 96.3 | 0.1 | 2100 | 2.3 | 16.5 | 8.3 | 1650 | 50 | 2.1 |
| Comparative Example 2 | PTMG 2 | 0.2 | 65.0 | 35.0 | 1300 | 1.4 | 15.8 | 4.9 | 850 | 0 | 1.1 |
| Comparative Example 3 | PTMG 5 | 1.5 | 93.0 | 5.5 | 2600 | 2.4 | 9.8 | 6.1 | 3200 | 3 | 0.1 |

### <Evaluation 1: Measurement of coating film hardness>

### (Preparation of coating material composition)

An acrylic polyol (product name: Acrydic A-801, glass transition temperature: 50°C, hydroxyl value: 50 mg KOH/resin g, solid content: 50 mass%, manufactured by DIC Corporation) and the modified polyisocyanate of each example (P1 to P9) were blended so that the equivalent ratio of hydroxyl groups to isocyanate groups was 1:1. Then, butyl acetate was added to prepare a coating material composition having a coating solid content of 40 mass%.

### (Production of coating film)

The obtained coating material composition was applied onto a steel sheet (JIS G3141, product name: SPCC-SB, treatment method: PF-1077, manufactured by Paltech Co., Ltd.) as an adherend, aged at 23°C and 50% RH for 1 hour, and then baked at 80°C for 10 hours to cure the coating material composition. Thus, a coating film having a film thickness of 20 µm was obtained.

The Martens hardness of the obtained coating film was measured using HM2000 (product name, manufactured by Fischer Instruments) in accordance with JIS Z 2255. The evaluation criteria are shown below, and the evaluation results are shown in Table 3.
A: Martens hardness is 90 or more
B: Martens hardness is 60 or more and less than 90
C: Martens hardness is less than 60

### <Evaluation 2: Storage stability evaluation>

The coating material composition prepared in Evaluation 1 was stored at 45°C for 24 hours. The viscosity of the coating material composition was measured before and after storage, and the rate of change in viscosity before and after storage (initial viscosity and viscosity after storage) was determined by the following formula, and the storage stability was evaluated based on the rate of change. Here, the above viscosity was measured at 25°C using a B-type viscometer. 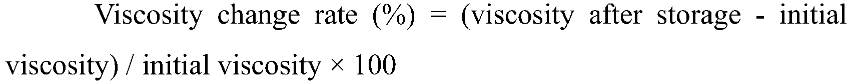 Viscosity change rate (%) = (viscosity after storage - initial viscosity) / initial viscosity × 100

The evaluation criteria are shown below, and the evaluation results are shown in Table 3.
A: viscosity change rate is less than 120%
B: viscosity change rate is 120% or more and less than 250%
C: viscosity change rate is 250% or more

**[Table 3]**

| | Coating film hardness | | Storage stability | |
|---|---|---|---|---|
| | Measured value | Evaluation | Viscosity change rate (%) | Evaluation |
| Example 1 | 90 | A | 100 | A |
| Example 2 | 90 | A | 100 | A |
| Example 3 | 75 | B | 200 | B |
| Example 4 | 60 | B | 80 | A |
| Example 5 | 75 | B | 150 | B |
| Example 6 | 60 | B | 220 | B |
| Comparative Example 1 | 50 | C | 130 | B |
| Comparative Example 2 | 90 | A | 300 | C |
| Comparative Example 3 | 30 | C | 110 | A |

## Claims

1. A modified polyisocyanate that is an allophanatization reaction product of a polyisocyanate comprising an aliphatic polyisocyanate having an aliphatic hydrocarbon group having 4 to 6 carbon atoms and a polyol comprising polytetramethylene ether glycol, or a modified product thereof,
wherein a dispersity is 1.0 to 2.1, and
wherein a proportion of a content of urethane groups to a total content of allophanate groups, isocyanurate groups, and urethane groups is 19 mol% or less.

2. The modified polyisocyanate according to claim 1, wherein the proportion of the content of urethane groups to the total content of allophanate groups, isocyanurate groups, and urethane groups is 0.01 to 7 mol%.

3. The modified polyisocyanate according to claim 1, wherein a proportion of a content of allophanate groups to the total content of allophanate groups, isocyanurate groups, and urethane groups is 75 to 98 mol%.

4. The modified polyisocyanate according to claim 1, wherein a proportion of a content of isocyanurate groups to the total content of allophanate groups, isocyanurate groups, and urethane groups is 0.1 to 7 mol%.

5. The modified polyisocyanate according to claim 1, wherein an average number of isocyanate groups is 6.0 to 8.0.

6. The modified polyisocyanate according to claim 1, wherein a number average molecular weight is 1500 to 2000 g/mol.

7. The modified polyisocyanate according to claim 1, wherein a number average molecular weight of the polytetramethylene ether glycol is 200 to 800.

8. The modified polyisocyanate according to claim 1, wherein a dispersity of the polytetramethylene ether glycol is 1.00 to 1.60.

9. A polyurethane resin-forming composition comprising the modified polyisocyanate according to any one of claims 1 to 8 and a polyol.

10. A coating material composition comprising the polyurethane resin-forming composition according to claim 9.

11. A coating film comprising a cured product of the coating material composition according to claim 10.
